**Europäisches Patentamt**

**European Patent Office**

**Office européen des brevets**

(19)

(11) Veröffentlichungsnummer: **0 161 265**
**B1**

(12) **EUROPÄISCHE PATENTSCHRIFT**

(45) Veröffentlichungstag der Patentschrift: **12.12.90**

(21) Anmeldenummer: **84903622.3**

(22) Anmeldetag: **08.10.84**

(86) Internationale Anmeldenummer:
**PCT/CH84/00166**

(87) Internationale Veröffentlichungsnummer:
**WO 85/02053 09.05.85 Gazette 85/11**

(51) Int. Cl.⁵: **H 01 B 19/00, B 29 C 37/00**

(54) **VERFAHREN UND VORRICHTUNG FÜR DIE HERSTELLUNG EINES SCHRAUBENFÖRMIGEN SCHIRMBANDES UND EINES FREILEITUNGSISOLATORS.**

(30) Priorität: **01.11.83 CH 5887/83**

(43) Veröffentlichungstag der Anmeldung:
**21.11.85 Patentblatt 85/47**

(45) Bekanntmachung des Hinweises auf die
Patenterteilung:
**12.12.90 Patentblatt 90/50**

(84) Benannte Vertragsstaaten:
**CH DE FR GB LI SE**

(56) Entgegenhaltungen:
**DE-A-2 905 874**

(73) Patentinhaber: **KLÄY, Jean-Roland, Dr.**
**Im Chrummenacher 39**
**CH-8307 Lindau (CH)**
(73) Patentinhaber: **TAUXE, Laure-Lise**
**Route de Prélaz 27**
**CH-1807 Blonay (CH)**
(73) Patentinhaber: **MERZ, Josiane**
**Unterwegmattstrasse 8**
**CH-3555 Trubschachen (CH)**

(72) Erfinder: **Kläy, Hans**
**deceased**
**(CH)**

(74) Vertreter: **Munzinger, John Patrick**
**CH-1254 Jussy l'Eglise Geneva (CH)**

## Beschreibung

Die vorliegende Erfindung bezieht sich auf ein Verfahren und auf eine Vorrichtung zur Herstellung eines schraubenförmigen Schirmbandes, sowie auf ein Verfahren und auf eine Vorrichtung zur Herstellung eines Freileitungsisolators.

Hochspannungs- und Höchstspannungs-Freileitungen bestehen im allgemeinen aus stählernen Gittermasten oder Pylonen, an denen die Leitungen an Aufhängungs-Isolatoren befestigt sind, welche in der Lage sind, Gewichte von 10 Tonnen und mehr zu tragen. Diese Isolatoren sind so ausgebildet, dass bei Betriebspannung keine Ueberschläge bei verschmutzter Atmosphäre auftreten und nur ein unschädlicher Kriechstrom fliessen kann. Für einen sicheren Betrieb sollten die Isolatoren Kriechwege zwischen ihren Enden aufweisen die im Vergleich zur axialen Länge des Isolators so lang wie möglich sind un gleichförmige Breiten haben, und dies kann im allgemeinen mit schraubenförmig angeordneten Schirmrippen erzielt werden.

Derartige Isolatoren sind bereits mit schraubenförmigen Rippen um einen zylindrischen Kern hergestellt worden. Die deutsche Patentschrifft Nr. 1 190 072 vom 5. April 1963 gibt an, wie man solche Rippen an einem Kern bildenden zylindrischen Stab anbringen kann. Die französische Patentschrift Nr. 76.25859 vom 26. August 1976 beschreibt eine Rippe, die aus Kunststoff besteht. Jedoch zeigt keine dieser Vorveröffentlichungen, wie man eine solche Rippe erzeugen kann. In der deutschen Patentschrift Nr. 2 905 874.0 vom 16. Februar 1979 beschreibt der Anmelder ein Verfahren zur Herstellung eines Bandes aus Kunststoff zwischen einem Paar erhitzten konischen Walzen und zur Anbringung des Bandes an einem im wesentlichen zylindrischen Stab aus einem elektrisch isolierenden Material zur Herstellung eines Isolators, der eine schraubenförmige Rippe aufweist.

Die Erfindung ist in den unabhängigen Patentansprüchen 1, 4, 7 und 9 angegeben.

Wie aus der obenstehenden Einleitung hervorgeht, ist die Erfindung von besonderer Wichtigkeit bei der Herstellung von Isolatoren zur Verwendung in elekrischen Freileitungen, insbesondere in verschmutzenden Gebieten.

In der anliegenden vereinfachten Zeichnung, die als Beispiel vorgelegt wird, stellen dar;

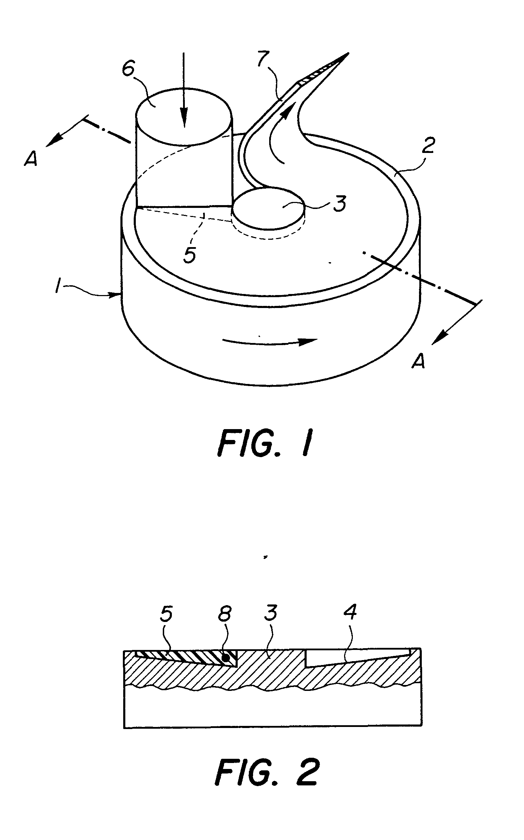

Fig. 1 eine perspektivische Ansicht einer Vorrichtung zur Herstellung eines schraubenförmigen Bandes, wie es die Erfindung lehrt, und

Fig. 2 eine Seitenansicht der Vorrichtung gemäss Fig. 1, entlang der Linie A—A in Fig. 1 teilgeschnitten gezeichnet.

Die gezeigte Vorrichtung enthält einen Teller 1 mit einer Oberseite 2, die mit einer mittigen zylindrischen Erhöhung oder Nabe 3 versehen ist, welche von einer ringförmigen tiefliegenden Fläche 4 umgeben ist, die nach unten und innen ein Gefälle aufweist.

Im Betrieb bringt man eine dünne Schicht 5 eines breiigen wärmevernetzbaren Materials, hier bestehend aus einem reaktionsfähigen breiigen in den Gummi Zustand überführbaren Gemisches, durch eine Düse 6 auf die Oberfläche 4, des Tellers 1 seitlich dessen zentraler Nabe 3 auf, wobei die Düse 6 das breiige Gemisch über eine Leitung von einer Quelle erhält, beispielsweise über nicht dargestellte Zahnradpumpen. Die Oberfläche 4 wird auf eine Temperatur erwärmt, bei der das breiige Gemisch der Schicht 5 in den Gummizustand überführt wird, um als Schirmband 7 abgehoben zu werden, bevor der Teller 1 eine vollständige Drehung ausgeführt hat, d.h. bevor das Band 7 in Berührung mit der Düse 6 gelangt.

Beim vorliegenden Beispiel wird das Schirmband 7 zur Herstellung eines Freiluftisolators zur Bildung einer schraubenförmigen Schirmrippe auf einem zylindrischen Isolierstab aus einen Kunsthargzebundenen Glasfaserstrangverwendet. Zu diesem Zweck sollte das Schirmband 7 ausser seinen elektrisch isolierenden Eigenschaften dauerhaft und wetterfest sein. Silicongummi hat sich als geeigneter Kunststoff erwiesen. Das aus der Düse 6 extrudierte breiige Material besteht aus einem Gemisch aus Grundmaterial und Katalysator. Die Überführung in den Gummizustand kann in etwa 10 Sekunden abgeschlossen sein, wenn die Oberfläche 4 des Tellers 1 auf einer Temperatur von etwa 200°C liegt. Im vorliegenden Fall wird die Fläche 4 auf eine Temperatur von 100 bis 200°C erwärmt. Das Band 7 wird von der Fläche 4 nach etwa 2/3 eines Umlaufes abgenommen. Die Oberfläche 4 ist mit einem Antihaftbelag, beispielsweise mit Polytetrafluoräthylen überzogen.

Die Unterseite der Schicht 5 wird durch die schräge Fläche 4 und die Oberseite durch die Kante der Düse 6 gebildet. Die Dicke der Schicht 5 wird durch den Abstand zwischen der Fläche 4 und der Düsenkante bestimmt.

Das Schirmband 7 aus Silicongummi wird dann um den Isolierstab gewickelt. Eine Vorrichtung dreht den Isolierstab mit der gleichen Geschwindigkeit wie den Teiler 1 und bewegt ihn gleichzeitig axial vorwärts, so dass sich das Band 7 um den Isolierstab mit der erforderlichen Schraubensteigung aufwickelt.

Bevor das Band 7 auf den Isolierstab aufgewickelt wird, bringt man mit Hilfe einer Düse eine Schicht aus Kalthartendem Silikonkleber als Schutz- und Klebstoff auf den Isolierstab auf. Das geschieht fortlaufend ohne Unterbrechung. Während der Aufwicklung des Bandes 7 auf den Isolierstab, gelangt der innere breite Rand des Bandes 7 in Berührung mit dem Schutz- und Klebstoff auf dem Isolierstab und wird mit diesem verklebt, um eine radiale schraubenförmige Schirmrippe zu bilden. So können beliebig lange Stäbe mit einer Schirmrippe bewickelt werden. Um das Schirmband 7 schraubenförmig auf den kernbildenden Stab passend aufwickeln zu können, muss die Vorrichtung zur Herstellung des Bandes entsprechend ausgebildet sein: Insbesondere muss der Durchmesser der Nabe 3 dem Durchmesser des Isolierstabes, die Neigung der ringförmigen Fläche 4 der Neigung der Schirmrippe und die Dicke der Schicht 5 der Dicke der Schirmrippe entsprechen. Genauer ausgedrückt, soll die Abwicklungslänge einer Windung der inneren Kante der Schirmrippe um den Isolierstab gleich dem Umfang der Nabe 3 sein. Zudem wird genaue und exakte Aufwicklung des Schirmbandes 7 auf den Stab durch eine geeignete Wahl der Umdrehungsgeschwindigkeit des Teilers 1 und des Stabes sowie einer axialen Vorschubgeschwindigkeit des Stabes gewährleistet.

Damit das Band 7 sich nicht verzieht, während es um den Isolierstab gewickelt wird, wird ein nichtdehnbarer Faden 8 aus elektrisch isolierendem Material, beispielsweise Nylon, in die Schicht 5 im Bereich des inneren Randes eingebettet. Der Faden 8 wird in das Gemisch durch die Düse 6 eingeführt, bevor das Gemisch erwärmt und dadurch in den Gummizustand übergeführt wird.

Die Schirmrippe, die sich beim Aufwickeln des Schirmbandes 7 um den Isolierstab bildet, definiert einen schraubenförmigen Kriechweg mit praktisch gleichmässiger Breite über den ganzen Isolator und grosser Länge im Vergleich zur Stablänge.

## Patentansprüche

1. Verfahren zur Herstellung eines schraubenförmigen Schirmbandes aus Isolierkunststoff, insbesondere zur Verwendung als Isolierschirm an Isolierstäben von Freileitungsisolatoren, dadurch gekennzeichnet, dass breiiges Isolierkunststoff ergebendes wärmevernetzbares Material, z.B. ein Silicongummi ergebendes Gemisch aus Grundmaterial und Katalysator, in einem Schicht (5) auf einen rotierenden Teller (1) seitlich dessen Rotationsachse (3) aufgebracht und durch Erwärmen des Tellers (1) Vernetzt wird, wobei die Drehzahl des Tellers (1) so gewählt wird, dass die Vernetzung des Materials vor einer ganzen Umdrehung des Tellers (1) eintritt und das Schirmband, nach weniger als einer Umdrehung des Teilers abgehoben werden kann.

2. Verfahren nach Anspruch 1, dadurch gekennzeichnet, dass der Teller (1) auf 100—200°C aufgeheizt wird.

3. Verfahren nach Anspruch 1 oder 2, dadurch gekennzeichnet, dass beim Auftrager des Materials gleichzeitig ein nicht dehnbarer Isolierfaden (8) in die Schicht (5) im Bereich des inneren Randes eingezogen wird.

4. Vorrichtung zur Herstellung eines schraubenförmigen Schirmbandes aus Isolierkunstoff, insbesondere zur Verwendung als solierschirm an Isolierstäben von Freileitungsisolatoren, dadurch gekennzeichnet, dass sie ein beheizbaren drehbaren Teller (1) und eine Düse (6) zum Aufbringen einer Schicht (5) eines breiigen Isolierkunststoff ergebenden wärmevernetzbaren Materials auf den Teller (1) aufweist, wobei die Düse (6) seitlich zur Rotationsachse (3) des Tellers (1) angeordnet ist.

5. Vorrichtung nach Anspruch 4, dadurch gekennzeichnet, dass der Teller (1) eine obere Fläche (4) zur Aufnahme der Schicht (5) aufweist, die zur Formung der einen Seite und der Kanten des Bandes (7) ausgebildet ist, und dass zur Formung der anderen Seite des Bandes (7) die Auslasskante der Düse (6) dient, wobei der Abstand zwischen der Auslasskante der Düse (6) und der oberen Fläche (4) des Tellers (1) die Dicke der Schicht (5) und damit des Bandes (7) bestimmt.

6. Vorrichtung nach Anspruch 4 oder 5, dadurch gekennzeichnet, dass die obere Fläche (4) des Tellers (1) mit einem Antikaftbelag, z.B. Polytetrafluoroäthylen, versehen ist.

7. Verfahren zur Herstellung eines Freileitungsisolators aus einem Isolierstab mit auf eine Schraubenlinie angeordneten und von diesem abstrehenden Kunststoffisolierschirm, wobei das zum Bilden des Kunststoffisolierschirmes bestimmte breiigen, Isolierkunststoff ergebende wärmevernetzbare Material, z.B. ein Silicongummi erstbender Gemisch aus Grundmaterial und katalysator, durch Heissvernetzung in ein schraubenförmiges Schirmband vorgefertigt wird, um auf den Isolierstab aufgewickelt und verklebt zu werden, dadurch gekennzeichnet, dass, das breiige wärmevernetzbare Material auf einem rotierenden Teller (1) seitlich dessen Rotationsachse (3) aufgebracht und durch Erwärmen des Tellers vernetz wird, wobei die Drehzahl des Tellers (1) so gewählt wird, dass die Vernetzung des Materials vor einer ganzen Umdrehung des Tellers (1) eintritt, so dass das Schirmband (7) nach weniger als einer Umdrehung des Tellers abgehoben und das so erhaltene Schirmband (7) als der schraubenförmige Kunststoffisolierschirm auf den Isolierstrab, z.B. aus einen Kunstharzgebundenen Glasfaserstrang, aufgewickelt und mit diesem verklegt wird.

8. Verfahren nach Anspruch 7, dadurch gekennzeichnet, dass der Isolierstab mit Schutz- und Klebstoff beschichtet wird, kurz bevor das Schirmband (7) darauf schraubenförmig aufgewickelt und Verklebt wird.

9. Vorrichtung zur Herstellung eines Freileitungsisolators enthaltend eine Anordnung I zur Erzeugung eines schraubenförmigen Schirmbandes aus Isolierkunststoff und eine Anordnung II zum Aufwickeln dieses Schirmbandes, auf einen Isolierstab, wobei die Anordnung I einen drehbaren und beheizbaren Teller (1) und eine Düse (6) zum Aufbringen einer Schicht (5) eines treiigen, Isolierkunstoffergebenden wärmevernetzbaren Materials, z.B. ein Silicongummiergebendes Gemisch aus Grundmaterial und Katalysator auf den Teller (1) aufweist, wobei die Düse (6) seitlich zur Rotationsachse (3) des Tellers (1) angeordnet ist, und die Anordnung II eine Einrichtung zum schraubenförmigen Aufwickeln des Bandes (7) auf den Isolierstab der in Umdrehung versetzt und mit vorbestimmter Schraubensteigung vorangetrieben wird und eine Düse zun Aufbringen von Schutz- und Klebstoff auf den Isolierstab aufweist.

10. Vorrichtung nach Anspruch 9, gekennzeichnet durch eine Düse zum Auftragen des Schutz- und Klebstoffes auf den Isolierstab kurz von dem Aufwickeln des Bandes (7).

11. Vorrichtung nach Anspruch 9 oder 10, wobei der Umfang der Nabe (3) der Rotationsachse des Tellers (1), welche frei von Isolationsmasse bleibt, der Abwicklungslänge einer Windung der inneren Kante des Bandes um den Isolierstab herum entspricht.

## Revendications

1. Procédé de fabrication d'une bande-écran hélicoïdale en matière synthétique isolante, notamment destinée à être utilisée comme écran isolant sur des tiges isolantes d'isolateurs de lignes aériennes, caractérisé en ce que de la matière pâteuse réticulable à chaud pour produire de la matière synthétique isolante, par exemple un mélange de matière de base et de catalyseur susceptible de produire du caoutchouc de silicone, est appliquée sous forme de couche (5) sur une assiette rotative (1) latéralement de son axe de rotation (3) et est réticulée en chauffant l'assiette (1), la vitesse de rotation de l'assiette (1) étant choisie de telle sorte que la réticulation de la matière se sera produite avant l'accomplissement d'un tour entier de l'assiette (1) et que la bande-écran puisse être enlevée après moins d'un tour de l'assiette.

2. Procédé selon la revendication 1, caractérisé en ce que l'assiette (1) est chauffée à une température de 100 à 200°C.

3. Procédé selon la revendication 1 ou 2, caractérisé en ce qu'un fil isolant inextensible (8) est introduit dans la couche (5) lors de l'application de celle-ci, au voisinage du bord intérieur.

4. Appareil pour la fabrication d'une bande-écran héliocoïdale en matière synthétique isolante, notamment destinée à être utilisée comme écran isolant sur des tiges isolantes d'isolateurs de lignes aériennes, caractérisé en ce qu'il comprend une assiette rotative chauffable (1) et une buse (6) servant à appliquer sur l'assiette (1) une couche (5) de matière pâteuse réticulable à chaud pour produire de la matière synthétique isolante, la buse (6) étant disposée latéralement de l'axe de rotation (3) de l'assiette (1).

5. Appareil selon la revendication 4, caractérisé en ce que l'assiette (1) présente une surface supérieure (4) destinée à recevoir la couche (5) et qui est conçue pour former une des surfaces et les bords de la bande (7), et en ce que le bord de sortie de la buse (6) sert à former la surface opposée de la bande (7), la distance entre le bord de sortie de la buse (6) et la surface supérieure (4) de l'assiette (1) déterminant l'épaisseur de la couche (5) et par conséquent de la bande (7).

6. Appareil selon la revendication 4 ou 5, caractérisé en ce que la surface supérieure (4) de l'assiette (1) est munie d'une couche anti-adhésive, par exemple de polytétrafluoréthylène.

7. Procédé de fabrication d'un isolateur pour ligne aérienne formé d'une tige isolante sur laquelle un écran isolant en matière synthétique est disposé de façon hélicoïdale et saillante, suivant lequel, dans le but de réaliser l'écran isolant de matière synthétique, de la matière pâteuse réticulable à chaud pour produire de la matière synthétique isolante, par exemple un mélange de matière de base et de catalyseur susceptible de produire du caoutchouc de silicone, est préformée par réticulation à chaud en une bande-écran hélicoïdale pouvant ensuite être enroulée et collée sur la tige isolante, caractérisé en ce que la matière pâteuse réticulable à chaud est appliquée sur une assiette rotative (1) latéralement de son axe de rotation (3) et est réticulée en chauffant l'assiette, la vitesse de rotation d l'assiette (1) étant choisie de telle sorte que la réticulation de la matière se produise avant l'accomplissement d'un tour entier de l'assiette (1), afin que la bande-écran (7) puisse être enlevée après moins d'un tour de l'assiette et que la bande-écran (7) ainsi obtenue puisse être enroulée sur la tige isolante, par exemple faite d'un boudin de fibres de verre liées avec de la résine synthétique, et y être collée pour réaliser l'écran isolant hélicoïdal en matière synthétique.

8. Procédé selon la revendication 7, caractérisé en ce que la tige isolante est revêtue de matière protective et adhésive peu avant que la bande-écran (7) soit enroulée et collée sur elle.

9. Appareil pour la fabrication d'un isolateur pour ligne aérienne, comportant un agencement I pour la production d'une bande-écran hélicoïdale en matière synthétique isolate et un agencement II pour enrouler cette bande-écran sur une tige isolante, dans lequel l'agencement I comprend une assiette rotative et chauffable (1) et une buse (6) pour appliquer sur l'assiette (1) un couche (5) de matière pâteuse réticulable à chaud pour produire de la matière synthétique isolante, par exemple un mélange de matière de base et de catalyseur susceptible de produire du caoutchouc de silicone, la buse (6) étant disposée latéralement de l'axe de rotation (3) de l'assiette (1), et l'agencement II comprenant un dispositif apte à enrouler de façon hélicoïdale la bande (7) sur la tige isolante qu'elle entraîne en rotation et fait avancer avec un pas prédéterminé, et une buse pour appliquer de la matière protective et adhésive sur la tige isolante.

10. Appareil selon la revendication 9, caractérisé par une buse pour appliquer la matière protective et adhésive sur la tige isolante peu avant d'y enrouler la bande (7).

11. Appareil selon la revendication 9 ou 10, dans lequel la circonférence du moyeu (3) de l'axe rotatif de l'assiette (1), lequel reste exempt de masse isolante, correspond à long longueur développée d'une spire du bord intérieur de la bande autour de la tige isolante.

## Claims

1. A method of producing a helical screen-band of insulating synthetic material, in particular for use as an insulating screen on insulating rods of insulators for overhead power transmission lines, characterized in that pasty material that is heat-crosslinkable to produce insulating synthetic material, e.g. a silicone rubber producing mixture of base material and catalyst, is applied as a layer (5) on a rotating plate (1) to one side of its axis of rotation (3) and becomes crosslinked by heating the plate (1), the speed of rotation of the plate (1) being so chosen that the crosslinking of the material will have occurred before the completion of one full revolution of the plate (1) and the screen-band may be removed under one revolution of the plate.

2. A method according to claim 1, characterized in that the plate (1) is heated to a temperature of 100 to 200°C.

3. A method according to claim 1 or 2, characterized in that an inextensible insulating thread (8) is introduced into the layer (5) as it is being applied, in the region of the inner edge.

4. Apparatus for producing a helical screen-band of insulating synthetic material, in particular for use as an insulating screen on insulating rods of insulators for overhead power transmission lines, characterized in that it comprises a heatable rotary plate (1) and a nozzle (6) for applying on the plate (1) a layer (5) of pasty material that is heat-crosslinkable to produce insulating synthetic material, the nozzle (6) being arranged to one side of the axis of rotation (3) of the plate (1).

5. Apparatus according to claim 4, characterized in that the plate (1) has an upper surface (4) for receiving the layer (5) and which is designed to form one side and the edges of the band (7), and in that the output edge of the nozzle (6) serves to form the opposite side of the band (7), the distance between the output edge of the nozzle (6) and the upper surface (4) of the plate (1) determining the thickness of the layer (5) and hence of the band (7).

6. Apparatus according to claim 4 or 5, characterized in that the upper surface (4) of the plate (1) is provided with a non-stick layer, e.g. polytetrafluoroethylene.

7. A method of producing an insulator for an overhead power transmission line and consisting of an insulating rod on which an insulating screen of synthetic material is helically and protrudingly disposed, wherein for the purpose of forming the insulating screen of synthetic material, pasty material that is heat-crosslinkable to produce insulating synthetic material, e.g. a silicone rubber producing mixture of base material and catalyst, is preformed by heat-crosslinking into a helical screen-band for subsequent winding on and adhesion to the insulating rod, characterized in that the pasty, heat-crosslinkable material is applied on a rotating plate (1) to one side of its axis of rotation (3) and becomes crosslinked by heating the plate, the speed of rotation of the plate (1) being so chosen that the crosslinking of the material will have occurred before the completion of one full revolution of the plate (1), so that the screen-band (7) may be removed in under one revolution of the plate and the resulting screen-band (7) may be wound on the insulating rod, e.g. made of a rope of glass fibres bonded with synthetic resin, and stuck thereto to form the helical insulating screen of synthetic material.

8. A method according to claim 7, characterized in that the insulating rod is coated with protective and adhesive material shortly before the screen-band (7) is helically wound thereon and stuck thereto.

9. Apparatus for producing an insulator for an overhead power transmission line, including an arrangement I for producing a helical screen-band made of insulating synythetic material and of an arrangement II for winding said screen-band on an insulating rod, wherein arrangement I comprises a heatable and rotatable plate (1) and a nozzle (6) for applying on the plate (1) a layer (5) of pasty material that is heat-crosslinkable to produce insulating synthetic material, e.g. a silicone rubber producing mixture of base material and catalyst, the nozzle (6) being arranged to one side of the axis of rotation (3) of the plate (1), and arrangement II comprises means for helically winding the band (7) on the insulating rod which it sets in rotation and drives forward with a predetermined pitch, and a nozzle for applying protective and adhesive material on the insulating rod.

10. Apparatus according to claim 9, characterized by a nozzle for applying the protective and adhesive material on the insulating rod shortly before winding on the band (7).

11. Apparatus according to claim 9 or 10, wherein the circumference of the hub (3) of the rotational axis of the plate (1), said hub remaining free of insulation mass, corresponds to the developed length of one turn of the inner edge of the band around the insulating rod.

FIG. 1

FIG. 2